# EUROPEAN PATENT APPLICATION

(11) **EP 2 502 810 A1**
(43) Date of publication of application: **26.09.2012**
(21) Application number: 09852643.7
(22) Date of filing: 24.12.2009
(51) Int. Cl.: B62J 1/28, B60N 2/66, A47C 7/46

(54) **BICYCLE**

(30) Priority: 22.12.2009 RU 2009147328
(71) Applicant: Rostock Biotech Research Ltd., Tortola (VG)
(72) Inventor: NEKRASOV, Andrey Dmitrievich, Novosibirskaya obl., 630099 (RU)
(74) Representative: Bucher, Ralf Christian
(86) International application number: PCT/RU2009/000718
(87) International publication number: WO 2011/078719

(57) **Abstract**

The technical result of the present invention is the possibility to immobilize the physiological curves in the cervical and lumbar regions of the spine, i.e. to implement the "healthy spine" principle. This technical result is achieved using a bicycle that comprises handle bars, wheels, a pedal mechanism and a seat with a back, which are mounted on a frame, wherein the seat back is provided with pads capable of vertical movement, the back is mounted so that the inclination angle thereof relative to the seat can be adjusted, the pads may have a constant volume or a variable volume, and the handle bars are mounted so that the vertical and horizontal position thereof as well as the inclination angle relative to the seat can be adjusted.

## Description

### BACKGROUND ART

A prior art bicycle comprises a frame provided with handlebars, wheels, a pedal mechanism, and a seat with a backrest (for example, Russian Patent RU 2,022,862 C1, November 15, 1994).

The prior art bicycle is not convenient enough in use because it lacks a mechanism to adjust its components in accordance with a person's individual anthropological characteristics, in particular, the physiological curvatures of the person's spine.

### DISCLOSURE OF INVENTION

The utility model is basically aimed at expanding the range of technical devices used, and developing a bicycle of simple design convenient in use and allowing the seat with the backrest to be adjusted in accordance with a person's individual anthropological characteristics.

The technical result of the claimed bicycle is that it allows the cyclist to maintain the position of his or her back supported by pads unchanged during the entire cycling period. The claimed design also helps maintain (retain) the physiological curvatures in the neck and lumbar parts of the cyclist's spine from beginning to end of bicycle riding. The claimed invention, therefore, implements the "healthy back" principle under which the spine can retain its natural physiological curvatures during cycling that prevent the intervertebral disks from being forced into the spinal channel and injuring the nervous structures, with a disk-related lumbar pain developing afterward.

The technical result is achieved in a bicycle comprising a frame provided with handlebars, wheels, a pedal mechanism, and a seat with a backrest, the backrest having at least one vertically movable pad and being further capable of varying its angle of inclination to the seat, the pad having a constant or variable volume, and the handlebars being capable of varying their vertical position and angle of inclination to the seat.

The backrest may be provided with two pads, one of which is positioned in the area of the neck part of the cyclist's spine and the other pad, in the lumbar area of his or her spine.

The backrest may be inclined to the horizontal within the range of 5 to 30 degrees, and the pedal mechanism moved forward from, and upward to, the seat.

The vertical position of the pads is varied by pad position variation units.

A pad position variation unit may comprise zippers provided in the slit of the median vertical line of the backrest and a vertical slot provided inside the backrest.

The volume of the pads may be varied by an inflation unit.

The pads may be moved horizontally by a mechanical extension unit.

The pads may be made of a resilient or plastic material, or a "shape retention" material allowing them to completely fill the physiological curvatures (lordoses) of the lumbar and neck parts of the person's spine.

The bicycle may be provided with a unit to push the pectoral and lumbar parts of the spine against the seat backrest.

### BRIEF DESCRIPTION OF DRAWINGS

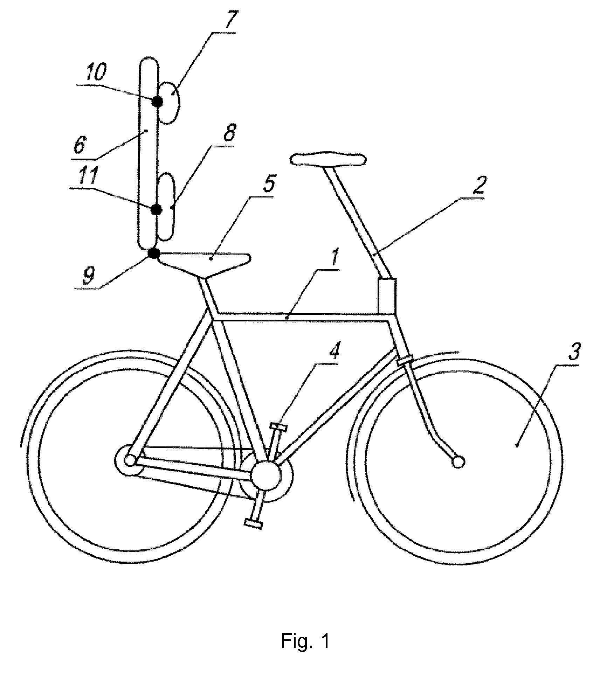

FIG. 1 shows a general view of the bicycle; and

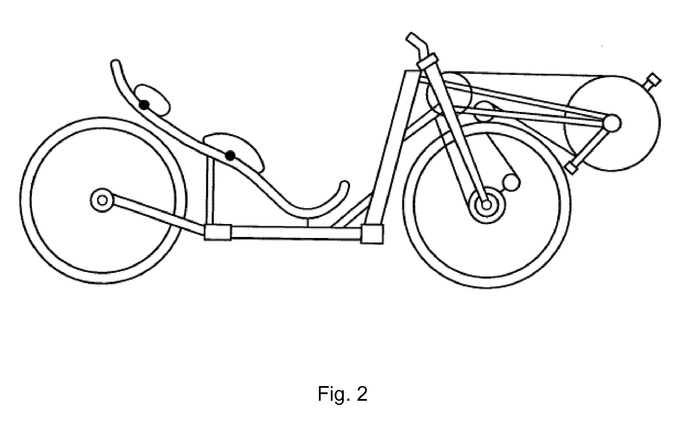

FIG. 2 shows a view of the bicycle having a backrest folded out and the pedal mechanism moved to a different position.

### BEST MODE FOR CARRYING OUT THE INVENTION

The bicycle comprises a frame 1 having handlebars 2 pivoted thereon, wheels 3, a pedal mechanism 4, and a seat 5 with a backrest 6, the backrest of the seat being provided with vertically movable pads 7 and 8 and the backrest 6 having an angle of inclination to the seat that can be varied by a unit 9, the pads 7 and 8 having a constant or variable volume, and the handlebars 2 being pivoted such that their position can be varied vertically and horizontally and their angle of inclination to the seat varied vertically.

The natural physiological curvatures of a person's spine while he or she is cycling are retained by the two movable support pads 7 and 8 for the lumbar and neck physiological curvatures of the spine that are moved by the person sitting on the seat as he or she changes the position of his or her body. The cyclist can vary his or her position on the seat by moving the pads easily to whatever position wanted. The position of the pads is varied vertically by pad position variation units 10 and 11.

The pad position variation units 10 and 11 can be designed as zippers provided in a slit extending along the median vertical line of the seat backrest and a vertical slot (not shown) inside the backrest. The backrest may have its position relative to the seat varied by the unit 9.

The pads may have their volume varied by an inflation unit (not shown). The pads may be moved horizontally by a mechanical extension unit (not shown). The pads may be made of a resilient or plastic material, or a "shape retention" material that can fill completely the physiological curvatures of the lumbar and neck parts of the spine. The bicycle is provided with a unit to push the pectoral and lumbar parts of the spine against the seat backrest.

The backrest may be positioned at an inclination angle of 5 to 30 degrees to the horizontal, and the pedal mechanism moved forward from, and upward to, the seat.

The cyclist leans back on the backrest of the claimed design while driving as the road gradients change or under the effect of environmental factors. The cyclist's reliance on the backrest in any position of his or her body relieves body tension caused by the cyclist sitting on the seat to improve comfort and ease fatigue of cycling. The position of the handlebars of the claimed design further contributes to the back being maintained in a preferred position, without the cyclist leaning forward or changing the position of his or her back supported by the backrest.

When, therefore, a cyclist sits on a seat having a backrest and handlebars of the claimed design his or her lordoses are maintained by the moving pads preventing the intervertebral disks from being forced out of place, development of radicular disk conflict, and other pathological events occurring in the spinal channel.

### INDUSTRIAL APPLICABILITY

The bicycle of the claimed design can be used as a road or touring vehicle.

## Claims

1. A bicycle comprising a frame provided with handlebars pivoted thereon, a pedal mechanism, and a seat with a backrest, the backrest having at least one vertically movable pad and being set at a variable angle of inclination to the seat, the pad having a constant or variable volume, and the handlebars having a vertically variable position and a variable angle of inclination to the seat.

2. A bicycle as claimed in claim 1, wherein the seat backrest is provided with two pads, one in the neck area of the spine and the other in the lumbar area of the spine.

3. A bicycle as claimed in claim 2, wherein the backrest is provided at an angle of 5 to 30 degrees to the horizontal, and the pedal mechanism is moved forward from, and upward to, the seat.

4. A bicycle as claimed in claim 2, wherein the vertical position of the pads is varied by pad position variation units.

5. A bicycle as claimed in claim 4, wherein a pad position variation unit comprises zippers provided in a slit extending along the median vertical line of the seat backrest and a vertical slot inside the backrest.

6. A bicycle as claimed in claim 2, wherein the pads have a volume that can be varied by an inflation unit.

7. A bicycle as claimed in claim 2, wherein the pads may be moved horizontally by a mechanical extension unit.

8. A bicycle as claimed in claim 2, wherein the pads are made of a resilient or plastic material, or a "shape retention" material enabling them to fill completely the physiological curvatures of the lumbar and neck parts of the spine.

9. A bicycle as claimed in claim 1, further provided with a unit to push the pectoral and lumbar parts of the spine against the seat backrest.
